# EUROPÄISCHE PATENTSCHRIFT

(11) **EP 1 518 043 B1**
(45) Veröffentlichungstag und Bekanntmachung des Hinweises auf die Patenterteilung: **13.02.2008**
(21) Anmeldenummer: 03760678.7
(22) Anmeldetag: 23.06.2003
(51) Int. Cl.: F01N 3/00

(54) **ABGASW RME BERTRAGER UND VERFAHREN ZU SEINER HERSTELLUN G**
EXHAUST GAS HEAT EXCHANGER AND METHOD FOR THE PRODUCTION THEREOF
ECHANGEUR THERMIQUE POUR GAZ D'ECHAPPEMENT ET PROCEDE DE FABRICATION ASSOCIE

(30) Priorität: 25.06.2002 DE 10228246
(43) Veröffentlichungstag der Anmeldung: 30.03.2005
(73) Patentinhaber: Behr GmbH & Co. KG, 70469 Stuttgart (DE)
(72) Erfinder: BRUNNER, Steffen, 71554 Weissach Im Tal (DE); BÄCHNER, Thomas, 71636 Ludwigsburg (DE); GRÜNENWALD, Bernd, 72622 Nürtingen (DE); SCHEMEL, Joachim, 73061 Ebersbach (DE)
(74) Vertreter: Grauel, Andreas
(86) Internationale Anmeldenummer: PCT/EP2003/006574
(87) Internationale Veröffentlichungsnummer: WO 2004/001203

(56) Entgegenhaltungen:
- EP-A- 1 153 690
- EP-A- 1 154 143
- PATENT ABSTRACTS OF JAPAN vol. 1998, no. 04, 31. März 1998 (1998-03-31) & JP 09 310996 A (USUI INTERNATL IND CO LTD), 2. Dezember 1997 (1997-12-02)

## Beschreibung

Die Erfindung betrifft einen Abgaswärmeübertrager für Kraftfahrzeuge nach dem Oberbegriff des Patentanspruches 1, bekannt durch die DE-A 199 07 163 der Anmelderin. Die Erfindung betrifft auch ein Verfahren zur Herstellung eines solchen Abgaswärmeübertragers.

Durch die DE-A 199 07 163 der Anmelderin wurde ein geschweißter Abgaswärmeübertrager bekannt, der aus einem Gehäusemantel, einem Rohrbündel und Rohrböden besteht, wobei die Enden der Rohre in den Rohrböden und die Rohrböden über Umfangsnähte mit dem Gehäusemantel verschweißt sind. Die Verschweißung der Rohrenden im Rohrboden erfolgt stirnseitig, während die Verschweißung der Rohrböden mit dem Gehäusemantel umfangseitig erfolgt, d. h. der die Verschweißung ausführende Laserstrahl ist senkrecht zu den Rohrachsen ausgerichtet. Dabei wird der Laserstrahl entweder um das Gehäuse herum geführt, oder der Laserstrahl steht fest, und das Gehäuse rotiert um seine Längsachse. Diese unterschiedlichen Schweißrichtungen (bezogen auf die Richtung des Laserstrahls) machen mindestens zwei auf einander folgende Einspannungen des Werkstückes, d. h. des Wärmeübertragerblockes notwendig. Dies erhöht den Fertigungsaufwand. Darüber hinaus ist bei dem bekannten Fertigungsverfahren vorgesehen, dass der Wärmeübertragerblock, d. h. der Gehäusemantel erst nach Legen von zwei Umfangschweißnähten auf Länge geschnitten wird, und zwar durch einen zusätzlichen Laserstrahlschnitt. Auch dies bedeutet zusätzlichen Fertigungsaufwand.

Es ist Aufgabe der vorliegenden Erfindung, einen Abgaswärmeübertrager der eingangs genannten Art hinsichtlich seiner Schweißkonstruktion zu verbessern. Es ist auch Aufgabe der Erfindung, ein vereinfachtes Verfahren zur Herstellung, insbesondere zur Verschweißung dieses Abgaswärmeübertragers bereitzustellen.

Die Lösung dieser Aufgabe ergibt sich aus den Merkmalen der Patentansprüche 1 und 3. Danach ist es möglich, beide Schweißverbindungen, d. h. die Rohr/Rohrboden-Verbindung und die Rohrboden/Gehäusemantel-Verbindung in einer Aufspannung des Wärmeübertragerblockes, d. h. quasi in einem Arbeitsgang durchzuführen. Beide Schweißnähte können von der Stirnseite des Wärmeübertragerblockes her erfolgen, so dass der Block nicht umgespannt werden muss. Darüber hinaus entfällt der zusätzliche Arbeitsschritt des Ablängens des Gehäusemantels durch Trennschweißen, da der Gehäusemantel bereits vor dem Schweißen auf Länge zugeschnitten ist.

Nach einer vorteilhaften Ausgestaltung der Erfindung ist der Rohrboden topfförmig ausgebildet, d. h. mit einem aufgestellten Rand versehen, der bündig mit dem Gehäusemantel abschließt und somit relativ einfach durch eine Umlaufnaht mit dem Gehäusemantel verschweißt werden kann.

Durch das erfindungsgemäße Herstellungsverfahren werden die Stückkosten des Abgaswärmeübertragers aufgrund geringerer Fertigungszeiten reduziert. Der Wärmeübertragerblock, bestehend aus Rohren, Rohrboden und Gehäusemantel wird zunächst montiert, wobei der Gehäusemantel bereits fertig auf Länge geschnitten ist. Danach erfolgen eine Aufspannung des Wärmeübertragerblockes und die stirnseitige Verschweißung durch eine Umfangsnaht und eine Vielzahl von Rohrnähten. Dadurch, dass die Verschweißung von ein und der selben Seite aus erfolgt, nämlich von der Stirnseite, können alle Schweißnähte parallel zueinander, d. h. quasi

Aus der JP 9310996 ist ein Wärmeübertrager mit einem Rohrbündel und einem Metallrohrboden bekannt, der mit einem vergrößerten Ende eines Gehäusekörperrohres verbunden ist.

Aus der JP 63137595 ist ein Laserlichtschweißverfahren bekannt.

Aus der JP 1131969 ist ein Wärmeübertrager aus Metall mit einem Wärmeübertragerkörper bekannt, wobei eine Endplatte an ein Ende des Wärmeübertragerkörpers angeschweißt ist.

Aus der EP 1154143 ist ein GER-Kühler bekannt, wobei Abgas von einem Ende einer Haube durch Rohre zu einer anderen Haube zum Wärmeaustausch von Abgas mit Kühlwasser. zeitgleich durchgeführt werden. Dies reduziert die Fertigungszeiten nochmals.

Ein Ausführungsbeispiel der Erfindung ist in der Zeichnung dargestellt und wird im Folgenden näher beschrieben. Es zeigen
- Fig. 1: einen Abgaswärmeübertrager,
- Fig. 2: einen Schnitt durch den Stirnbereich des Abgaswärmeübertragers,
- Fig. 3: eine Einzelheit X aus Fig. 2,
- Fig. 4: den Abgaswärmeübertrager mit seinen Einzelteilen in Explosivdarstellung,
- Fig. 5: das stirnseitige Schweißen der Umfangsnaht und
- Fig. 6: das stirnseitige Schweißen der Rohr/Rohrbodennähte.

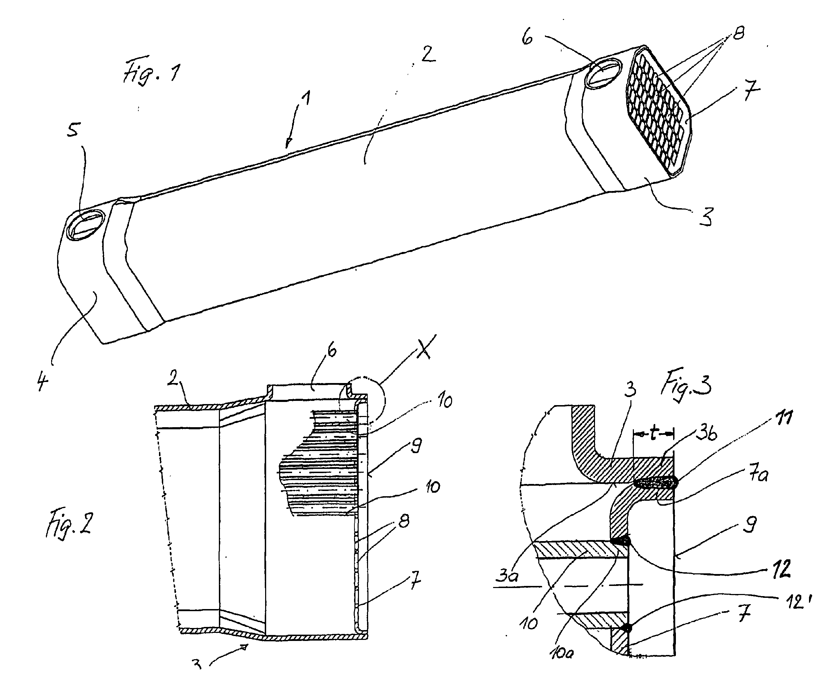

**Fig. 1** zeigt einen Abgaswärmeübertrager 1, der als Abgaskühler für die Rückkühlung von Abgasen bei der Abgasrückführung eingesetzt werden kann. Ein Gehäusemantel 2, bestehend aus Edelstahlblech, weist zwei hinsichtlich des Querschnittes leicht erweiterte Stirnbereiche 3 und 4 auf, die jeweils eine Kühlmitteleintritts- und -austrittsöffnung 5, 6 aufweisen. In den in der Zeichnung rechts liegenden Stirnbereich 3 ist ein Rohrboden 7 eingesetzt, der in gleichmäßiger Anordnung rechteckförmige Öffnungen 8 aufweist, in welche hier nicht dargestellte Rohrenden eines Rohrbündels eingesetzt sind.

**Fig. 2** zeigt den Stirnbereich 3 aus Fig. 1 im Längsschnitt durch die Kühlmitteldurchtrittsöffnung 6. Der Rohrboden 7 ist bündig in den Stirnbereich des Gehäusemantels 2 eingesetzt und bildet somit eine gemeinsame Abschlussebene 9. In die Öffnungen 8 des Rohrbodens 7 sind Abgasrohre 10 eingesetzt, wobei nur einige Rohre 10 des gesamten Rohrbündels dargestellt sind. Diese Abgasrohre 10 werden auf ihrer Innenseite vom Abgas durchströmt und auf ihrer Außenseite von Kühlmittel umspült, welches z. B. einem nicht dargestellten Kühlmittelkreislauf eines Verbrennungsmotors des Kraftfahrzeuges entnommen wird.

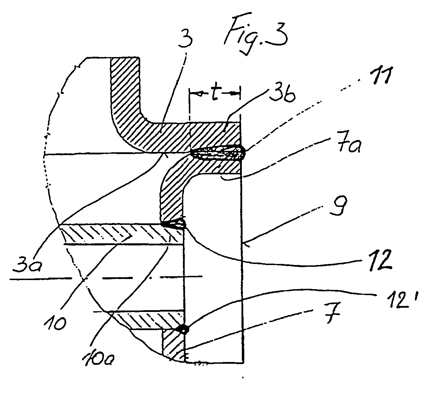

**Fig. 3** zeigt eine Einzelheit X aus Fig. 2, d. h. den stirnseitigen Randbereich von Rohrboden 7 und Stirnbereich 3 des Gehäusemantels 2. Der Rohrboden 7 weist in seinem Randbereich einen etwa rechtwinklig aufgestellten Rand 7a auf, der sich umfangseitig an die Innenfläche 3a des Stirnbereiches 3 anlegt und stirnseitig bündig mit dem Gehäusemantel 2 bzw. dessen Stirnende 3b abschließt, und zwar in der Stirnebene 9. Der Rand 7a des Rohrbodens 7 und der Stirnbereich 3b des Gehäusemantels 2 sind durch eine stirnseitige Schweißnaht, eine so genannte Umfangsnaht 11 miteinander dicht verbunden. Die Umfangsnaht 11 ist durchgeschweißt, d. h. sie erstreckt sich bis zu einer Tiefe t; sie kann auch nur eingeschweißt sein, d. h. mit einer geringeren Tiefe als t. Das Rohr 10 weist ein Rohrende 10a auf, welches etwa bündig mit dem Rohrboden 7 abschließt und über eine Schweißnaht 12 mit dem Rohrboden 7 verbunden ist. Die Schweißnaht 12 ist durchgeschweißt, d. h. sie erstreckt sich über die gesamte Dicke des Rohrbodens 7. Alternativ ist jedoch auch ein reines Einschweißen des Rohrendes 10a möglich, was in der Zeichnung als Alternativnaht 12' mit geringerer Einschweißtiefe dargestellt ist. In gleicher Weise sind sämtliche Rohre 10 mit dem Rohrboden 7 durch eine Schweißnaht 12 verbunden. Die Schweißnähte 11 und 12 bzw. 12' werden jeweils von der Stirnseite des Abgaswärmeübertragers 1 gelegt - wie im Folgenden näher beschrieben wird.

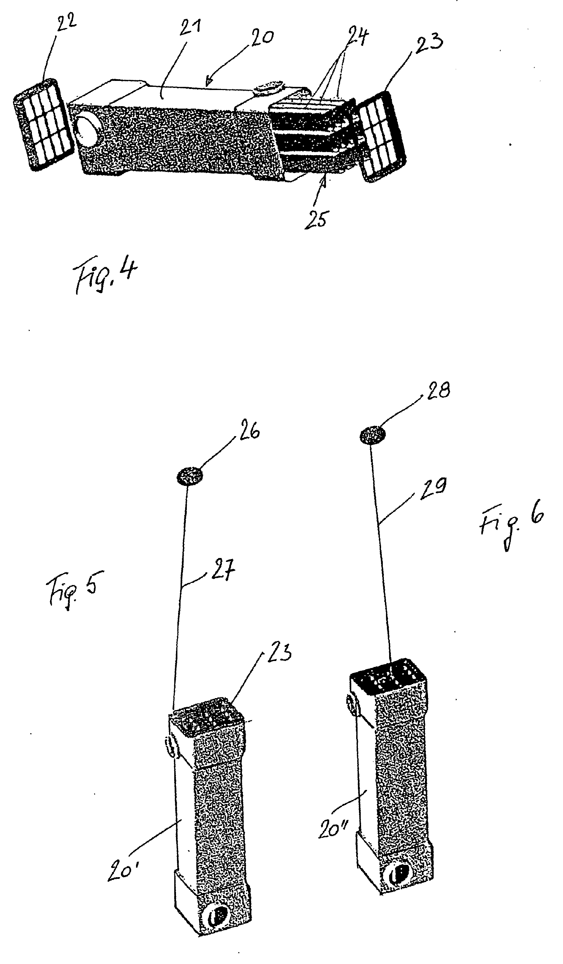

**Fig. 4** zeigt einen leicht abgewandelten Abgaswärmeübertrager 20 mit einem Gehäusemantel 21, zwei Rohrböden 22, 23 sowie einem aus neun Abgasrohren 24 bestehenden Rohrbündel 25 - alles in Explosivdarstellung. Die Herstellung des Abgaswärmeübertragers 1 bzw. 20 erfolgt nun in der Weise, dass zunächst der Wärmeübertragerblock, bestehend aus Gehäusemantel 20, Rohrbündel 25 und Rohrböden 22, 23 mechanisch gefügt bzw. montiert wird. Dabei sind die Rohrenden in die Rohrböden 22, 23 und letztere in die Stirnseiten des Gehäusemantels 20 eingesetzt. Der Gehäusemantel 20 ist - wie oben erwähnt - bereits auf Längen geschnitten.

**Fig. 5** zeigt den fertig montierten Block 20', der, z. B. in senkrechter Anordnung, in einer nicht dargestellten Spannvorrichtung gehalten ist. Oberhalb des Rohrbodens 23, d. h . in stirnseitiger Verlängerung des Blockes 20' befindet sich eine Laserstrahlschweißvorrichtung, schematisch dargestellt durch eine Ellipse 26. Von dieser Schweißvorrichtung 26 geht ein Laserstrahl 27 aus, der die in Fig. 3 dargestellte Umfangsnaht 11 legt, d. h. die Verbindung zwischen Rohrboden 7 und Gehäusemantel 2 herstellt, indem er einmal den Umfang abfährt. Der Laserstrahl kann hierbei senkrecht oder leicht geneigt zur Blockachse stehen.

In **Fig. 6** ist wiederum schematisch eine Schweißvorrichtung 28 dargestellt, von der ein Laserstrahl 29 auf die Stirnseite des Wärmeübertragerblocks 20" gerichtet ist. Dieser Laserstrahl 29 legt die Schweißnähte 12 (vgl. Fig. 3), indem er jeweils den Umfang eines Rohrendes umfährt. Der Einfachheit halber ist hier nur ein Laserstrahl 29 dargestellt, es können jedoch mehrere Laserstrahlen gleichzeitig in Betrieb sein, d. h. maximal entsprechend der Anzahl der Rohre 10. Der in Fig. 6 dargestellt Wärmeübertragerblock 20" ist ebenfalls in einer nicht dargestellten Spannvorrichtung gehalten, d. h. in der selben wie in Fig. 5. Für das Legen der Schweißnähte 11 und 12 ist somit nur eine Einspannung des Wärmeübertragerblockes 20' bzw. 20" erforderlich. Die Schweißnähte 11 und 12 müssen nicht nacheinander hergestellt werden, vielmehr können diese Schweißnähte synchron, d. h. ungefähr gleichzeitig gelegt werden, was die Fertigungszeiten herabsetzt.

## Patentansprüche

1. Abgaswärmeübertrager für Kraftfahrzeuge, bestehend aus einem Rohrbündel von Abgasrohren (10), die stirnseitig mit Rohrböden (7) verschweißt sind, und einem Gehäusemantel (2), der mit den Rohrböden (7) verschweißt ist, **dadurch gekennzeichnet, dass** die Rohrböden (7) über eine stirnseitig angeordnete Umfangsnaht (11) mit dem Gehäusemantel (2, 3b) verschweißt sind.

2. Abgaswärmeübertrager nach Anspruch 1, **dadurch gekennzeichnet, dass** die Rohrböden (7) einen aufgestellten Rand (7a) und der Gehäusemantel Stirnenden (3b) aufweisen, dass die Ränder (7a) und die Stirnenden (3b) bündig angeordnet und durch die Umfangsnaht (11) verbunden sind.

3. Verfahren zur Herstellung eines Abgaswärmeübertragers nach Anspruch 1 oder 2, **dadurch gekennzeichnet,**
- **dass** Rohre (24), Rohrböden (22, 23) und Gehäusemantel (21) zu einem Wärmeübertragerblock (20', 20") gefügt werden,
- **dass** der Block (20', 20") in einer Spannvorrichtung gehalten wird und
- **dass** sowohl der Gehäusemantel (21) und die Rohrböden (22, 23) als auch die Rohre (24) und die Rohrböden (22, 23) stirnseitig in einer Aufspannung miteinander verschweißt werden.

4. Verfahren nach Anspruch 3, **dadurch gekennzeichnet, dass** die stirnseitige Verschweißung durch mindestens einen Laserstrahl (27, 29) erfolgt.

## Claims

1. An exhaust gas heat exchanger for motor vehicles, comprising a pipe bundle of exhaust pipes (10) which are welded at the ends of the pipe bases (7), and a housing casing (2) which is welded to the pipe bases (7), **characterized in that** the pipe bases (7) are welded to the housing casing (2, 3b) via a circumferential bead (11) which is arranged at the end.

2. The exhaust gas heat exchanger as claimed in claim 1, **characterized in that** the pipe bases (7) have a raised rim (7a), and the housing casing has ends (3b) in that the rims (7a) and the ends (3b) are arranged flush and are connected by means of the circumferential bead (11).

3. A method for production of an exhaust gas heat exchanger as claimed in claim 1 or 2, **characterized**
- **in that** pipes (24), pipe bases (22, 23) and the housing casing (21) are joined to form a heat exchanger block (20', 20"),
- **in that** the block (20', 20") is held in a clamping apparatus, and
- **in that** both the housing casing (21) and the pipe bases (22, 23) as well as the pipes (24) and the pipe bases (22, 23) are welded to one another at the ends in a jig.

4. The method as claimed in claim 3, **characterized in that** the end welding is carried out by means of at least one laser beam (27, 29).

## Revendications

1. Echangeur thermique de gaz d'échappement pour véhicules automobiles, se composant d'un faisceau de tubes de gaz d'échappement (10), qui sont soudés côté frontal à des plaques tubulaires (7), et d'une enveloppe de boîtier (2), qui est soudée aux plaques tubulaires (7), **caractérisé en ce que** les plaques tubulaires (7) sont soudées à l'enveloppe de boîtier (2, 3b) par le biais d'une soudure périphérique (11) disposée côté frontal.

2. Echangeur thermique de gaz d'échappement selon la revendication 1, **caractérisé en ce que** les plaques tubulaires (7) présentent un bord dressé (7a) et l'enveloppe de boîtier présente des extrémités frontales (3b), et **en ce que** les bords (7a) et les extrémités frontales (3b) sont disposés à la même hauteur et sont reliés par la soudure périphérique (11).

3. Procédé de fabrication d'un échangeur thermique de gaz d'échappement selon la revendication 1 ou 2, **caractérisé en ce**
- **que** des tubes (24), des plaques tubulaires (22, 23) et l'enveloppe de boîtier (21) sont assemblés en un bloc d'échangeur thermique (20', 20")
- **que** le bloc (20, 20") est maintenu dans un dispositif de serrage et
- **qu'**aussi bien l'enveloppe de boîtier (21) et les plaques tubulaires (22, 23) que les tubes (24) et les plaques tubulaires (22, 23) sont soudés l'une à l'autre côté frontal dans un dispositif de blocage.

4. Procédé selon la revendication 3, **caractérisé en ce que** la soudure côté frontal se fait par au moins un rayon laser (27, 29).
